# EUROPÄISCHE PATENTSCHRIFT

(11) **EP 1 322 715 B1**
(45) Veröffentlichungstag und Bekanntmachung des Hinweises auf die Patenterteilung: **16.11.2005**
(21) Anmeldenummer: 01982354.1
(22) Anmeldetag: 26.09.2001
(51) Int. Cl.: C09D 17/00, C09D 163/00

(54) **Verwendung einer chromathaltigen Pigmentpaste**
Use of a chromate-containing pigment paste
Utilisation d'une pâte pigmentée contenant un chromate

(30) Priorität: 29.09.2000 DE 10048268
(43) Veröffentlichungstag der Anmeldung: 02.07.2003
(73) Patentinhaber: BASF Coatings AG, 48165 Münster (DE)
(72) Erfinder: LAUMANN, Gisela, 48165 Münster (DE); AHLER, Friedel, 48351 Everswinkel (DE); BORGHOLTE, Harald, 48151 Münster (DE); HEISE, Wilhelm, 48161 Roxel (DE)
(74) Vertreter: Fitzner, Uwe
(86) Internationale Anmeldenummer: PCT/EP2001/011106
(87) Internationale Veröffentlichungsnummer: WO 2002/026904

(56) Entgegenhaltungen:
- US-A- 4 293 475
- US-A- 5 438 083

## Beschreibung

Die vorliegende Erfindung betrifft die Verwendung einer chromathaltigen Pigmentpaste für die Einstellung des anwendungstechnischen Eigenschaflsprofils von Mehrkomponentenfüllern auf der Basis von isocyanatreaktiven Bindemitteln und Polyisocyanaten oder von Epoxidharzen und Polyaminen. Außerdem betrifft die vorliegende Erfindung ein neues Mischsystem zur bedarfsgerechten Herstellung von chromathaltigen Mehrkomponentenfüllern unter Verwendung der chromathaltigen Pigmentpaste.

Mehrkomponentenfüller auf der Basis von isocyanatreaktiven Bindemitteln und Polyisocyanaten oder von Epoxidharzen und Polyaminen sind bekannt. Insbesondere werden sie für die Kraftfahrzeugreparaturlackierung verwendet. Die Mehrkomponentenfüller müssen sehr gute Haftung auf den unterschiedlichsten Substraten, insbesondere auf Aluminium, Eisen oder verzinktein Stahl, aufweisen. Außerdem sollen sie eine sehr gute Korrosionsschutzwirkung haben.

Die bislang am Markt befindlichen Systeme zeigen aber gewisse Schwächen in der Haftung und der Korrosionsschutzwirkung auf Aluminium.

Die Korrosionsschutzwirkung ließe sich in einfacher Weise durch die Zugabe von Chromatpigmenten zu den Mehrkomponentenfüllern bei deren Herstellung lösen. Bei dieser Vorgehensweise fallen aber aufgrund der Größe der Ansätze erhebliche Mengen an chromathaltigen Mehrkomponentenfüllern an, die außerdem in ihrer Zusammensetzung von vornherein im wesentlichen festgelegt sind. Diese Vorgehensweise ist daher nicht nur ökologisch bedenklich, sondern auch inflexibel.

Die Verwendung chromathaltiger Materialien muß aber aus ökologischen Gründen und wegen der entsprechenden Gesetzgebung weitestgehend reduziert werden. In vielen Fällen kann aber aus technischen Gründen nicht auf die Verwendung von Chromaten verzichtet werden.

Aufgabe der vorliegenden Erfindung ist es daher, mit möglichst geringen Mengen an Chromaten das Eigenschaftsprofil, insbesondere die Haftungseigenschaften und die Korrosionsschutzwirkung, der unterschiedlichsten Mehrkomponentenfüller auf der Basis von isocyanatreaktiven Bindemitteln und Polyisocyanaten oder von Epoxidharzen und Polyaminen in einfacher und flexibler Weise zu verbessern.

Außerdem soll die Herstellung eines Mischsystems ermöglicht werden aus dem bei Bedarf die unterschiedlichsten Mehrkomponentenfüller auf der Basis von isocyanatreaktiven Bindemitteln und Polyisocyanaten oder von Epoxidharzen und Polyaminen mit dem für die Verbesserung des Eigenschaftsprofils gerade notwendigen, minimalen Gehalt an Chromaten aus voneinander getrennt herstellbaren, lagerbaren und transportbaren Komponenten hergestellt werden kann.

Dabei sollen die resultierenden neuen chromathaltigen Mehrkomponentenfüller den herkömmlichen chromathaltigen Mehrkomponentenfüllern in der Haftung und deren Korrosionsschutzwirkung auf Aluminium gleichwertig, wenn nicht gar überlegen sein. Außerdem sollen sie bezüglich der Korrosionsschutzwirkung in der Lage sein, eine fehlende Chromatbehandlung der Metalloberfläche zu kompensieren.

Demgemäß wurde die Verwendung einer chromathaltigen Pigmentpaste gemäß Anpruch 1 gefunden.

Außerdem wurde das neue Mischsystem gemäβ Anspruch 11 zur bedarfsgerechten Herstellung chromathaltiger Mehrkomponentenfüller gefunden.

Der erste wesentliche Bestandteil der chromathaltigen Pigmentpaste ist mindestens ein Bindemittel mit isocyanatreaktiven funktionellen Gruppen und Epoxidgruppen.

Der Gehalt an isocyanatreaktiven funktionellen Gruppen kann breit variieren; vorzugsweise werden mindestens 1,8, bevorzugt mindestens 2,0 und insbesondere mindestens 2,1 meq/g Bindemittel verwendet.

Beispiele geeigneter isocyanatreaktiver funktioneller Gruppen sind Thiol-, primäre oder sekundäre Amino-, Imino- oder Hydroxylgruppen, insbesondere Hydroxylgruppen.

Die Bindemittel können den unterschiedlichsten Oligomer- und Polymerklassen entstammen. Beispiele geeigneter Oligomer- und Polymerklassen sind statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze« verwiesen.

Beispiele gut geeigneter (Co)Polymerisate sind (Meth)Acrylatcopolymerisate und partiell verseifte Polyvinylester.

Beispiele gut geeigneter Polyadditionsharze und/oder Polykondensationsharze sind Polyester, Alkyde, Polyurethane, Polylactone, Polycarbonate, Polyether, Epoxidharz-Amin-Addukte, Polyharnstoffe, Polyamide oder Polyimide.

Es kommen auch die Pfropfmischpolymerisate der vorstehend beschriebenen Oligomere und Polymere in Betracht, wie beispielsweise (Meth)Acrylatcopolymerisat-Polyester-, - Polyurethan- oder -Epoxidharz-Pfropfmischpolymerisate.

Erfindungsgemäß weisen die (Meth)Acrylatcopolymerisate oder ihre Pfropfmischpolymerisate besondere Vorteile auf und werden erfindungsgemäß besonders bevorzugt als Bestandteile verwendet

Die (Meth)Acrylatcopolymerisate sind an sich bekannte Polymere. Ihre Herstellung weist keine verfahrenstechnischen Besonderheiten auf, sondern erfolgt mit Hilfe der auf dem Kunststoffgebiet üblichen und bekannten Methoden der kontinuierlichen oder diskontinuierlichen radikalisch initiierten Copolymerisation in Masse, Lösung, Emulsion, Miniemulsion oder Mikroemulsion unter Normaldruck oder Überdruck in Rührkesseln, Autoklaven, Rohrreaktoren, Schlaufenreaktoren oder Taylorreaktoren bei Temperaturen von 50 bis 200°C.

Beispiele geeigneter (Meth)Acrylatcopolymerisate und Copolymerisationsverfahren werden in den Patentanmeldungen DE 197 09 465 A 1, DE 197 09 476 A 1, DE 28 48 906 A 1, DE 195 24 182 A 1, DE 198 28 742 A 1, DE 196 28 143 A 1, DE 196 28 142 A 1, EP 0 554 783 A 1, WO 95/27742, WO 82/02387 oder WO 98/Ö2466 beschrieben.

Wesentlich ist, daß bei der Herstellung der (Meth)Acrylatcopolymerisate Monomere mit isocyanatreaktiven funktionellen Gruppen und Monomere mit Epoxidgruppen einpolymerisiert werden.

Beispiele geeigneter Monomere mit isocyanatreaktiven funktionellen Gruppen sind Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinsich ungesättigten Carbonsäure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl- , 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; oder Hydroxycycloalkylester wie 1,4-Bis(hydroxymethyl)cyclohexan-, Octahydro-4,7-methano-1H-inden-dimethanol- oder Methylpropandiolmonoacrylat, monomethacrylat, -monoethacrylat, -monocrotonat, -monomaleinat, - monofumarat oder -monoitaconat; oder Umsetzungsprodukte aus cyclischen Estern, wie z.B. epsilon-Caprolacton und diesen Hydroxyalkyl- oder - cycloalkylestern; oder olefinisch ungesättigte Alkohole wie Allylalkohol oder Polyole wie Trimethylolpropanmono- oder diallylether oder Pentaerythritmono-, -di- oder -triallylether, die in untergeordneten Mengen eingesetzt werden, um ein Gelieren der (Meth)Acrylatcopolymerisate zu verhindern.

Beispiele geeigneter Monomere mit Epoxidgruppen sind die Glycidylester der Acrylsäure, Methacrylsäure, Ethacrylsäure, Crotonsäure, Maleinsäure, Fumarsäure und/oder Itaconsäure.

Die vorstehend beschriebenen (Meth)Acrylatcopolymerisate mit isocyanatreaktiven funktionellen Gruppen und Epoxidgruppen sind handelsübliche Produkte und werden beispielsweise unter der Marke Synthalat® A 200 von der Firma Synthopol Chemie vertrieben.

In der chromathaltigen Pigmentpaste sind die vorstehend beschriebenen Bindemittel in einer Menge von 10 bis 70, vorzugsweise 20 bis 40 und insbesondere 25 bis 35 Gew.%, jeweils bezogen auf die Gesamtmenge der Pigmentpaste, enthalten.

Der weitere wesentliche Bestandteil der chromathaltigen Pigmentpaste ist mindestens ein, insbesondere ein, Chromatpigment. Beispiele geeigneter Chromatpigmente sind Blei-, Zink-, Strontium- oder Bariumchromat.

In der chromathaltigen Pigmentpasten sind die Chromatpigmente in einer Menge von 30 bis 90, vorzugsweise 40 bis 60 und insbesondere 45 bis 55 Gew.- %, jeweils bezogen auf die Gesamtmenge der Pigmentpaste, enthalten.

Darüber hinaus kann die chromathaltige Pigmentpaste noch mindestens ein Thixotropierungsmittel enthalten.

Beispiele geeigneter Thixotropierungsmittel sind feinteiliges, durch Flammenhydrolyse hergestelltes amorphes Siliziumdioxid oder pyrogene Kieselsäure (vgl. Römpp Lexikon Lacke und Druckfarben, Georg Thieme Verlag, Stuttgart, New York, Seite 564, »Thixotropiermittel«).

In der chromathaltigen Pigmentpaste können die Thixotropierungsmittel in einer Menge von 0,1 bis 5, vorzugsweise 1,5 bis 4 und insbesondere 2 bis 3 Gew.- %, jeweils bezogen auf die Gesamtmenge der Pigmentpaste, enthalten sein.

Außerdem kann die chromathaltigen Pigmentpaste noch mindestens ein organisches Lösemittel enthalten. Beispiele geeigneter organischer Lösemittel sind Ketone wie Methylethlyketon, Methylisoamylketon oder Methylisobutylketon, Ester wie Ethylacetat, Butylacetat, Ethylethoxypropionat, Methoxypropylacetat oder Butylglykolacetat, Ether wie Dibutylether oder Ethylenglykol-, Diethylenglykol-, Propylenglykol-, Dipropylenglykol-, Butylenglykol- oder Dibutylenglykoldimethyl-, -diethyl- oder -dibutylether, N-Methylpyrrolidon oder Xylole oder Gemische aromatischer und/oder aliphatischer Kohlenwasserstoffe wie Solventnaphtha®, Benzin 135/180, Dipentene oder Solvesso®.

In der chromathaltigen Pigmentpaste können die organischen Lösemittel in einer Menge von 5 bis 30, vorzugsweise 10 bis 25 und insbesondere 15 bis 20 Gew.-%, jeweils bezogen auf die Gesamtmenge der Pigmentpaste, enthalten sein.

Darüber hinaus kann die chromathaltige Pigmentpaste mindestens einen weiteren Zusatzstoff enthalten. Beispiele geeigneter Zusatzstoffe sind die nachstehend beschriebenen.

Die Herstellung der chromathaltigen Pigmentpaste weist keine methodischen Besonderheiten auf sondern erfolgt durch das Vermischen der vorstehend beschriebenen Bestandteile in üblichen und bekannten Mischaggregaten wie wie Rührkessel, Dissolver oder Rührwerksmühlen, wobei die für die Handhabung von Chromaten erforderlichen Sicherheitsvorkehrungen getroffen werden.

Erfindungsgemäß ist es von Vorteil, wenn die chromathaltige Pigmentpaste nach ihrer Herstellung auf eine Mahlfeinheit nach Hegmann von 10 bis 30, vorzugsweise 15 bis 25 und insbesondere 20 bis 22 µm vermahlen wird (vgl. Römpp Lexikon Lacke und Druckfarben, Georg Thieme Verlag, Stuttgart, New York, Seite 271, »Grindometer«).

Erfindungsgemäß wird die chromathaltige Pigmentpaste zur Einstellung des anwendungstechnischen Eigenschaftsprofils von Mehrkomponentenfüllern auf der Basis von Bindemittel mit isocyanatreaktiven funktionellen Gruppen und Polyisocyanaten oder von Epoxidharzen und Polyaminen verwendet. Hierbei wird insbesondere die Haftung und die Korrosionsschutzwirkung der Mehrkomponentenfüller auf Metalloberflächen, insbesondere auf Aluminium, Eisen oder verzinktem Stahl, erhöht.

Somit ist die chromathaltige Pigmentpaste hervorragend als Komponente des neuen Mischsystems geeignet, das der bedarfsgerechten Herstellung chromathaltiger Mehrkomponentenfüller, wie sie beispielsweise in der Kraftfahrzeugreparaturlackierung verwendbar sind, dient.

Das neue Mischsystem umfaßt die folgenden getrennt voneinander herzustellenden, zu lagernden und zu transportierenden Komponenten:
(I) Mindestens eine neue chromathaltige Pigmentpaste wie in Anspruch 1 oder 11 beschrieben sowie
(II) mindestens eine Bindemittelkomponente, enthaltend mindestens Bindemittel mit isocyanatreaktiven funktionellen Gruppen und
(III) mindestens eine Vernetzungsmittelkomponente, enthaltend mindestens ein Polyisocyanat,
   oder alternativ
(IV) mindestens eine Bindemittelkomponente, enthaltend mindestens ein Epoxidharz und
(V) mindestens eine Vernetzungsmittelkomponente, enthaltend mindestens ein Polyamin.

Die Bindemittelkomponente (II) enthält mindestens ein Bindemittel mit isocyanatreaktiven funktionellen Gruppen. Beispiele geeigneter Bindemittel sind die vorstehend beschriebenen. In der Bindemittelkomponente (II) sind sie in stark variierenden Mengen enthalten. Vorzugsweise enthält die Bindemittelkomponente (II) das oder die Bindemittel in einer Menge von 10 bis 50, bevorzugt 11 bis 40 und insbesondere 12 bis 30 Gew. %, bezogen auf die Bindemittelkomponente (II).

Des weiteren enthält die Bindemittelkomponente (II) mindestens einen Füllstoff.

Beispiele geeigneter organischer und anorganischer Füllstoffe sind Kreide, Calciumsulfate, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder feinteilige Pulver aus kugelförmigen Kunststoffteilchen. Ergänzend wird auf Römpp Lexikon Lacke und Druckfarben, Georg Thieme Verlag, 1998, Seiten 250 ff., »Füllstoffe«, verwiesen.

Die Bindemittelkomponente (II) kann desweiteren mindestens ein Pigment enthalten.

Bei den Pigmenten kann es sich um organische oder um anorganische Pigmente handeln. Beispiele geeigneter Pigmente sind natürlich vorkommende Pigmente (vgl. Römpp Lexikon Lacke und Druckfarben, Georg Thieme Verlag, Stuttgart, New York, Seiten 400 und 467, »Natürlich vorkommende Pigmente«), synthetische Eisenoxid-Pigmente, Titandioxid-Pigmente, polycyclische Pigmente (vgl. Römpp Lexikon Lacke und Druckfarben, Seite 459 »Polycyclische Pigmente«), Azomethin-Pigmente, Azopigmente (vgl. Römpp Lexikon Lacke und Druckfarben, Seite 52, »Azomethin-Pigmente«, »Azopigmente«) oder Metallkomplex-Pigmente (vgl. Römpp Lexikon Lacke und Druckfarben, Seite 379, »Metallkomplex-Pigmente«).

Darüber hinaus kann die Bindemittelkomponente (II) noch mindestens einen Zusatzstoff enthalten.

Beispiele geeigneter Zusatzstoffe sind Nanopartikel, thermisch härtbare Reaktiverdünner, niedrig siedende organische Lösemittel und hochsiedende organische Lösemittel ("lange Lösemittel"), Wasser, UV-Absorber, Lichtschutzmittel, Radikalfänger, thermolabile radikalische Initiatoren, Vernetzungsmittel, wie sie in Einkomponentensystemen verwendet werden, Katalysatoren für die thermische Vernetzung, Entlüftungsmittel, Slipadditive, Polymerisationsinhibitoren, Entschäumer, Emulgatoren, Netz- und Dipergiermittel, Haflvermittler, Verlaufinittel, filmbildende Hilfsmittel, Sag control agents (SCA), rheologiesteuernde Additive (Verdicker), Flammschutzmittel, Sikkative, Trockungsmittel, Hautverhinderungsmittel, Korrosionsinhibitoren, Wachse oder zusätzliche Bindemittel, wie sie beispielsweise in dem Lehrbuch »Lackadditive« von Johan Bieleman, Wiley-VCH, Weinheim, New York, 1998, im Detail beschrieben werden.

Die Vernetzungsmittelkomponente (III) dient der Vernetzung der Bindemittelkomponente (II) und enthält mindestens ein Polyisocyanat.

Die Polyisocyanate enthalten im statistischen Mitteln mindestens 2,0, bevorzugt mehr als 2,0 und insbesondere mehr als 3,0 Isocyanatgruppen pro Molekül. Die Anzahl der Isocyanatgruppen ist nach oben im Grunde nicht begrenzt; erfindungsgemäß ist es indes von Vorteil, wenn die Anzahl 15, vorzugsweise 12, besonders bevorzugt 10, ganz besonders bevorzugt 8,0 und insbesondere 6,0 nicht überschreitet.

Beispiele geeigneter Polyisocyanate sind isocyanatgruppenhaltige Polyurethanpräpolymere, die durch Reaktion von Polyolen mit einem Überschuß an Düsocyanaten hergestellt werden können und bevorzugt niederviskos sind.

Beispiele geeigneter Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethylcyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Düsocyanatocyclopentan, 1,3-Diisocyanatocyclopentan, 1,2-Diisocyanatocyclohexan, 1,3-Diisocyanatocyclohexan, 1,4-Diisocyanatocyclohcxan, Dicyclohexylmethan-2,4'-diisocyanat, Trimethylendiisocyanat, Tetramethylendiisocyanat, Pentamethylendiisocyanat, Hexamethylendiisocyanat (HDI), Ethylethylendiisocyanat, Trimethylhexandiisocyanat, Heptamethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4-oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan oder flüssiges Bis(4-isocyanatocyclohexyl)methan eines trans/trans-Gehalts von bis zu 30 Gew.-%, vorzugsweise 25 Gew.-% und insbesondere 20 Gew.-%, wie es den Patentanmeldungen DE 44 14 032 A 1, GB 1220717 A 1, DE 16 18 795 A 1 oder DE 17 93 785 A 1 beschrieben wird, bevorzugt Isophorondiisocyanat, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan oder HDI, insbesondere HDI.

Es können auch Isocyanurat-, Biuret-, Allophanat-, Iminooxadiazindion-, Urethan-, Harnstoff- Carbodiimid und/oder Uretdiongruppen aufweisende Polyisocyanate (B 1) verwendet werden, die in üblicher und bekannter Weise aus den vorstehend beschriebenen Diisocyanaten hergestellt werden. Beispiel geeigneter Herstellungsverfahren und Polyisocyanate sind beispielsweise aus dem Patentschriften CA 2,163,591 A, US-A-4,419,513, US 4,454,317 A, EP 0 646 608 A, US 4,801,675 A, EP 0 183 976 A 1, DE 40 15 155 A 1, EP 0 303 150 A 1, EP 0 496 208 A 1, EP 0 524 500 A 1, EP 0 566 037 A 1, US 5,258,482 A 1, US 5,290,902 A 1, EP 0 649 806 A 1, DE 42 29 183 A loder EP 0 531 820 A 1 bekannt

Der Gehalt der Vernetzungsmittelkomponente (III) an den Polyisocyanaten und kann breit variieren. In erster Linie richtet er sich nach der Viskosität, die für das Vermischen mit den weiteren Komponenten notwendig ist. Vorzugsweise liegt der Gehalt bei 20 bis 80, bevorzugt 30 bis 70 und insbesondere 35 bis 65 Gew.-%, bezogen auf die Vernetzungsmittelkomponente (III). Die Vernetzungsmittelkomponente (III) enthält noch mindestens eines der vorstehend beschriebenen organischen Lösemittel. Außerdem kann sie mindestens einen der vorstehend beschriebenen Zusatzstoffe enthalten, sofern diese nicht mit den Polyisocyanaten unerwünschte Reaktionen eingehen.

Zur Herstellung des neuen Mehrkomponentenfüllers auf der Basis von isocyanatreaktiven Bindemitteln und Polyisocyanaten wird die chromathaltige Pigmentpaste (I) vorzugsweise mit der Bindemittelkomponente (II) vermischt. Das Volumenverhältnis der Komponenten (I) zu (II) kann hierbei breit variieren. Vorzugsweise liegt es bei (I): (II) =1 : 1,1 bis 1: 10, bevorzugt 1,2 : 1 bis 1: 8 und insbesondere 1,3 : 1 bis 1: 6.

Die resultierende Mischung (I/II) wird anschließend mit der Vernetzungsmittelkomponente (III) vermischt. Auch hier kann das Volumenverhältnis der Mischung (I/II) zu der Vernetzungsmittelkomponente (III) breit variieren. Vorzugsweise liegt es bei (I/II): (III): = 1,1 : 1 bis 10: 1, bevorzugt 1,2: 1 bis 8: 1 und insbesondere 1,3 : 1 bis 6: 1.

Vorzugsweise wird der resultierende neue Mehrkomponentenfüller (I/II/III) mit einem sogenannten Einstellzusatz (VI) auf die notwendige Verarbeitungsviskosität eingestellt. Bei dem Einstellzusatz (VI) handelt es sich um eines der vorstehend beschriebenen Lösemittel; vorzugsweise werden Gemische von mindestens zwei, bevorzugt mindestens drei und insbesondere mindestens vier der vorstehend beschriebenen organischen Lösemittel verwendet. Das Volumenverhältnis von neuem Mehrkomponentenfüller (I/II/III) zu Einstellzusatz (VI) kann ebenfalls breit variieren. Vorzugsweise liegt es bei (I/II/III): (VI) = 10: 1 bis 1,1: 1, bevorzugt 8: 1 bis 1,2 : 1 und insbesondere 6: 1 bis 1,3: 1.

Methodisch gesehen bietet die Herstellung der vorstehend beschriebenen neuen Mehrkomponentenfüller keine Besonderheiten, sondern erfolgt in den vorstehend beschriebenen üblichen und bekannten Mischaggregaten, wobei die für die Handhabung von Chromaten vorgeschriebenen Sicherheitsvorkehrungen getroffen werden.

Die Bindemittelkomponente (IV) enthält mindestens ein Epoxidharz. Als Epoxidharze kommen alle aromatischen, aliphatischen und/oder cycloaliphatischen Epoxidharze mit Epoxidäquivalentgewichten zwischen 300 und 5.500, bevorzugt zwischen 400 und 3.000, besonders bevorzugt zwischen 600 und 900 und insbesondere zwischen 700 und 800 in Betracht. Bevorzugt werden Epoxidharze auf der Basis von Bisphenol-A und/oder -F und/oder epoxidierten Novolaken eingesetzt. Die Epoxidharze auf Basis von Bisphenol-A und/oder -F weisen dabei im allgemeinen eine Funktionalität ≤ 2, die epoxidierten Novolake eine Funktionalität ≤ 2 auf. Die Epoxidharze auf Basis von Bisphenol-A und/oder -F können aber durch Verzweigung, z. B. durch Trimethylolpropan, Glycerin, Pentaerythrit oder andere Verzweigungsreagenzien, auf eine Funktionalität von mehr als zwei gebracht werden. Als Epoxidharze können auch Alkylenglykoldiglycidylether oder deren verzweigte Folgeprodukt oder Alkylenglykolen flexibilisierte Epoxidharze auf Basis von Bisphenol-A und/oder -F eingesetzt werden. Des weiteren sind auch die Mischungen von mindestens zwei der vorstehend beschriebenen Epoxidharzen geeignet.

Die Epoxidharze sind handelsübliche Produkte und werden beispielsweise unter der Marke Epicote® 1001,1002,1004, 1055,1007, 1009 oder 300-4 F-10 von der Firma Shell-Chemie, XZ 86795 oder DER® 664, 667, 669, 662, 642 U oder 672 U von der Firma Dow oder Araldit® XB 4393, XB 4412, GT 7072, GT 7203, GT 7004, GT 7079 oder GT 7220 von der Firma Ciba vertrieben.

Der Gehalt der Bindemittelkomponente (IV) an Epoxidharzen kann breit variieren. Vorzugsweise liegt der Gehalt bei, bezogen auf die Bindemittel Komponente (IV) 5 bis 50, bevorzugt 6 bis 45 und insbesondere 7 bis 40 Gew.%.

Die Bindemittelkomponente (IV) enthält mindestens einen der vorstehend beschriebenen Füllstoffe sowie ggf. mindestens eines der vorstehend beschriebenen Pigmente. Darüber hinaus kann sie mindestens einen der vorstehend beschriebenen Zusatzstoffe, insbesondere zusätzliche Bindemittel, enthalten.

Methodisch gesehen bietet die Herstellung der Bindemittelkomponente (IV) keine Besonderheiten, sondern erfolgt, wie bei der neuen chromathaltigen Pigmentpaste beschrieben.

Die Vernetzungsmittelkomponente (V) enthält mindestens ein Polyamin für die Härtung der Epoxidharze der Bindemittelkomponente (IV). Beispiele geeigneter Polyamine sind Diethylentriamin, Triethylentetraamin, Polyamidoamine oder Polyimine, insbesondere Diethylentriamin. Der Gehalt der Vernetzungsmittelkomponente (V) kann breit variieren. Vorzugsweise liegt er bei 0,5 bis 10, bevorzugt 0,6 bis 5 und insbesondere 0,7 bis 3 Gew.-%, jeweils bezogen auf die Vernetzungsmittelkomponente (V). Außerdem enthält die Vernetzungsmittelkomponente (V) mindestens eines der vorstehend beschriebenen organischen Lösemittel. Darüber hinaus kann sie eine unterstöchiometrische Menge an Epoxidharzen enthalten, die nicht ausreicht, um alle Aminogruppe der Polyamine umzusetzen. Des weiteren kann die Vemetzungsmittelskomponente (V) mindestens einen der vorstehend beschriebenen Zusatzstoffe enthalten. Diese Zusatzstoffe dürfen indes nicht mit den Polyaminen sowie ggf. den Epoxidharzen reagieren.

Zur Herstellung des neuen Mehrkomponentenfüllers auf der Basis von Epoxidharzen und Polyaminen wird die neue chromathaltige Pigmentpaste (I) vorzugsweise mit der Bindemittelkomponente (IV) vermischt. Das Volumenverhältnis der Komponenten (I) zu (IV) kann hierbei breit variieren. Vorzugsweise liegt es bei (I): (IV) =1: 10 bis 1: 1,1, bevorzugt 1: 8 bis 1 : 1,2 und insbesondere 1: 6 bis 1: 1,3.

Die resultierende Mischung (IIIV) wird anschließend mit der Vernetzungsmittelkomponente (V) vermischt. Auch hier kann das Volumenverhältnis der Mischung (I/IV) zu der Vernetzungsmittelkomponente (V) breit variieren. Vorzugsweise liegt es bei (I/IV): (V): = 10: 1 bis 1,1: 1, bevorzugt 8: 1 bis 1,2: 1 und insbesondere 6: 1 bis 1,3: 1

Vorzugsweise wird der resultierende neue Mehrkomponentenfüller (I/IV/V) mit den vorstehend beschriebenen Einstellzusatz (VI) auf die notwendige Verarbeitungsviskosität eingestellt. Das Volumenverhältnis von neuem Mehrkomponentenfüller (I/IV/V) zu Einstellzusatz (VI) kann ebenfalls breit variieren. Vorzugsweise liegt es bei (I/IV/V): (V) = 10: 1 bis 1,1: 1, bevorzugt 8: 1 bis 1,2: 1 und insbesondere 6: 1 bis 1,3: 1.

Methodisch gesehen bietet die Herstellung des vorstehend beschriebenen neuen Mehrkomponentenfüllers ebenfalls keine Besonderheiten, sondern erfolgt in den vorstehend beschriebenen üblichen und bekannten Mischaggregaten, wobei die für die Handhabung von Chromaten vorgeschriebenen Sicherheitsvorkehrungen getroffen werden.

Es ist ein besondere Vorteil des neuen Mischsystems, daß seine Komponenten (I) bis (VI) in Verpackungen und Gebinden geeigneter Größe bei Bedarf an den Anwender, beispielsweise einen Autoreparatarlackierbetrieb, geliefert werden kann, der dann aus diesen Komponenten die neuen Mehrkomponentenfüller in der jeweils notwendigen Menge herstellt.

Methodisch weist die Applikation der neuen chromathaltigen Mehrkomponentenfüller keine Besonderheiten auf, sondern kann durch alle üblichen Applikationsmethoden, wie z.B. Spritzen, Rakeln, Streichen, Gießen, Tauchen, Träufeln oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen.

Als Substrate kommen Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien in Betracht.

Demnach sind die neuen Mehrkomponentenfüller auch für Anwendungen außerhalb der Kraftfahrzeugereparaturlackierung geeignet. Hierbei kommen sie insbesondere für die Lackierung von Möbeln, Fenstern, Türen, Bauwerken im Innen- und Außenbereich und die industrielle Lackierung, inklusive Coil Coating, Container Coating und die Imprägnierung oder Beschichtung elektrotechnischer Bauteile, in Betracht. Im Rahmen der industriellen Lackierungen eignen sie sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen. Vor allem aber ist das erfindungsgemäße Beschichtungsstoffsystem für die Autoreparaturlackierung geeignet.

Im Falle elektrisch leitfähiger Substrate wie Metalle können Grundierungen verwendet werden, die in üblicher und bekannter Weise aus Elektrotauchlacken (ETL) hergestellt werden. Hierfür kommen sowohl anodische (ATL) als auch kathodische Elektrotauchlacke (KTL), insbesondere aber KTL, in Betracht.

Wird das erfindungsgemäße Beschichtungsstoffsystem zur Kraftfahrzeugreparaturlackierung verwendet, sind die Substrate mit den Kraftfahrzeugerstlackierungen beschichtet.

Bei der Kraftfahrzeugreparaturlackierung werden die applizierten neuen Mehrkomponentenfüller vorzugsweise nach kurzem Ablüften während 1 bis 15 Minuten naß-in-naß mit einem üblichen und bekannten pigmentierten Zweikomponentendecklack beschichtet, wonach die Füllerschicht und die Decklackschicht bei Raumtemperatur oder bei Temperaturen bis zu 90°C, beispielsweise in einem Umluftofen oder bei kleineren Flächen mit Hilfe eines Föhns oder eines Infrarotstrahlers, gemeinsam getrocknet werden.

Im allgmeinen werden die neuen Mehrkomponentenfüller und die Zweikomponentendecklacke in einer Naßschichtdicke appliziert, daß nach ihrer Trocknung Schichten mit der für ihre Funktionen notwendigen und vorteilhaften Schichtdicken resultieren. Im Falle der Füllerschicht liegt diese Schichtdicke bei 20 bis 200, vorzugsweise 25 bis 180, besonders bevorzugt 30 bis 150 und insbesondere 35 bis 120 µm und im Falle der Decklackierung liegt sie bei bei 10 bis 200, vorzugsweise 15 bis 160, besonders bevorzugt 20 bis 140 und insbesondere 25 bis 120 µm.

Die chromathaltige Pigmentpaste ermöglicht es somit, mit möglichst geringen Mengen an Chromaten das Eigenschaftsprofil, insbesondere die Haftungseigenschaften und die Korrosionsschutzwirkung, von Mehrkomponentenfüllern auf der Basis von isocyanatreaktiven Bindemitteln und Polyisocyanaten oder von Epoxidharzen und Polyaminen in einfacher und flexibler Weise zu verbessern.

Außerdem ermöglicht die chromathaltige Pigmentpaste die Bereitstellung eines Mischsystems, aus dem bei Bedarf die unterschiedlichsten neuen Mehrkomponentenfüller auf der Basis von isocyanatreaktiven Bindemitteln und Polyisocyanaten oder von Epoxidharzen und Polyaminen mit dem für die Verbesserung des Eigenschaftsprofils gerade notwendigen, minimalen Gehalt an Chromaten aus voneinander getrennt herstellbaren, lagerbaren und transportierbaren Komponenten hergestellt werden können.

Dabei sind die neuen chromathaltigen Mehrkomponentenfüller den herkömmlichen chromathaltigen Mehrkomponentenfüllern in der Haftung und deren Korrosionsschutzwirkung auf Aluminium gleichwertig, wenn nicht gar überlegen. Außerdem sind sie bezüglich der Korrosionsschutzwirkung in der Lage, eine fehlende Chromatbehandlung der Metalloberfläche zu kompensieren.

### Beispiele und Vergleichsversuche

### Herstellbeispiel 1

### Die Herstellung einer Bindemittelkomponente (II)

Für die Herstellung des neuen Mehrkomponentenfüllers auf der Basis von isocyanatreaktiven Bindemitteln und Polyisocyanaten wurde in einem Tiansportgefäß eine Vorstufe der Bindemittelkomponente (II) durch Vermischen der folgenden Bestandteile hergestellt:

| | |
|---|---|
| 19,5 Gewichtsteile | Synthalat® A 200 (Hydroxyl- und Epoxidgruppen enthaltendes (Meth)Acrylatcopolymerisat der Firma Synthopol Chemie; Hydroxylzahl: 200 mg KOH/g), |
| 3,0 Gewichtsteile | einer Lösung von Epikote® 1001, |
| 4,0 Gewichtsteile | 1-Methoxypropylacetat-2, |
| 2,0 Gewichtsteile | Magnesiumsilikat (Micro Talkum 10 MO), |
| 10 Gewichtsteile | Titandioxidpigment (Titan Rutil R 960-28), |
| 0,05 Gewichtsteile | Schwarzpigment (Flammenruß 101), |
| 0,25 Gewichtsteile | Gelbpigment (Bayferrox® 920) und |
| 6,0 Gewichtsteile | Bariumsulfat (Blanc Fix N). |

Nach intensivem Dissolvern der Vorstufe wurden ihr 9,7 Gewichtsteile 1-Methoxypropylacetat-2 zugesetzt. Die verdünnte Vorstufe wurde unter Beachtung der für die Handhabung von Chromaten vorgeschriebenen Sicherheitsvorschriften mit 14 Gewichtsteilen eines Korrosionsschutzpigments (Zinkphosphat mit 0,15 Gew.% Zinkchromat; Heucophos® ZPZ) versetzt. Nach nochmaligem Dissolvern wurde die resultierende Vorstufe auf einer Rührwerksmühle auf eine Mahlfeinheit nach Hegmann von 18 bis 20 µm gemahlen. Hiernach wurde die Vorstufe mit 5,0 Gewichtsteilen Nitrocellulosewolle (30prozentig in Butylacetat), 0,5 Gewichtsteilen eines Copolymerisats von Ethylhexylacrylat und Ethylacrylat (25prozentig in Xylol; Verlaufmittel) und 3,5 Gewichtsteilen Butylacetat versetzt, wodurch die Bindemittelkomponente (II) resultierte.

### Herstellbeispiel 2

### Die Herstellung einer Vernetzungsmittelkomponente (III)

Für die Herstellung der Vernetzungsmittelkomponente (III) wurden die 50,6 Gewichtsteile eines Polyisocyanats auf der Basis von Hexamethylendiisocyanat (Basonat® HI 130 B/S der Firma BASF Aktiengesellschaft), 44, Gewichtsteile eines Gemischs aus organischen Lösemitteln (Solventnaphtha, Xylol, Butylacetat, 1-Methoxypropylacetat-2 und Butylglykolacetat), 0,6 Gewichtsteilen eines siloxangruppenbaltigen Dispergierhilfsmittels (Baysilon® OL 44 der Firma Bayer AG) und 4,0 Gewichtsteilen einer 1%igen Lösung von Dibutylzinndilaurat miteinander vermischt.

### Herstellbeispiel 3

### Die Herstellung einer Bindemittelkomponente (IV)

Für die Herstellung eines neuen Mehrkomponentenfüllers auf der Basis von Epoxidharzen und Polyaminen wurde zunächst ein Vorprodukt aus den folgenden Bestandteile hergestellt:

| | |
|---|---|
| 20 Gewichtsteile | einer Epoxidharzlösung (Parosin FE 42.4 von BASF Coatings AG), |
| 5,5 Gewichtsteile | eines Klarlacks, enthaltend, bezogen auf den Klarlack, 58,5 Gew.% Epikote® 1001 (100%ig), 2,5 Gew.% Plastopal® EBS 100 B (Harnstoff Formaldehyd-Haiz) und 39 Gew.% eines Lösemittelgemischs aus Xylol, Methoxypropanol und Isobutanol, |
| 0,6 Gewichtsteile | Silcasil® S Neu (pyrogenes Siliziumdioxid), |
| 0,4 Gewichtsteile | Aerosil® 380 (pyrogenes Siliziumdioxid), |
| 12 Gewichtsteile | Titan Rutil 2057, |
| 1,467 Gewichtsteile | Bayferrox® 3910, |
| 0,02 Gewichtsteile | Flammruß 101, |
| 10 Gewichtsteile | Talkum 10 MO Micro, |
| 4,833 Gewichtsteile | Sillitin® N 85, |
| 6,0 Gewichtsteile | Schwerspat EWO Normal, |
| 21 Gewichtsteile | Heucophos® ZPO und |
| 15 Gewichtsteile | eines Gemischs aus Xylol, Butanol und Methoxypropanol. |

Nach intensivem Dissolvern wurde das Vorprodukt auf einer Rührwerksmühle auf eine Mahlfeinheit nach Hegmann von 22 bis 24 µm vermahlen und mit 3,0 Gewichtsteilen Methoxypropanol und 0,5 Gewichtsteilen des in Herstellbeispiel 1 beschriebenen Verlaufmittels komplettiert.

### Herstellbeispiel 4

### Die Herstellung einer Vernetzungsmittelkomponente (V)

Für die Herstellung der Vernetzungsmittelkomponente (V) wurden die nachstehend beschriebenen Bestandteile miteinander vermischt:

| | |
|---|---|
| 1,4 Gewichtsteile | Diethylentriamin, |
| 7,3 Gewichtsteile | Epikote-Lösung, |
| 12 Gewichtsteile | Euredur® 115 (Polyamidoamin, 100%ig) und |
| 79,3 Gewichtsteile | eines Lösemittelgemisch aus Xylol, Methoxypropanol und Solventnaphtha. |

### Herstellbeispiel 5

### Die Herstellung des Einstellzusatzes (VI)

Für die Herstellung des Einstellzusatzes (VI) wurden 46,5 Gewichtsteile 1-Methoxypropylacetat-2, 30 Gewichtsteile Butylacetat, 20 Gewichtsteile Xylol, 2,0 Gewichtsteile Butylglykolacetat und 1,5 Gewichtsteile Ethylethoxypropionat miteinander vermischt.

### Herstellbeispiel 6

### Die Herstellung einer herkömmlichen chromathaltigen Bindemittelkomponente für die Herstellung eines chromathaltigen Mehrkomponentenfüllers auf Basis von Epoxidharzen und Polyaminen

Für die Herstellung einer herkömmlichen chromathaltigen Bindemittelkomponente zu Vergleichszwecken wurde ein Vorprodukt aus den folgenden Bestandteilen unter Beachtung der für die Handhabung von Chromaten geltenden Sicherheitsbestimmungen hergestellt:

| | |
|---|---|
| 15 Gewichtsteile | eines Klarlacks, enthaltend, bezogen auf den Klarlack, 58,5 Gew.-% Epikote® 1001 (100%ig), 2,5 Gew.% Plastopal® EBS 100 B und 39 Gew.-% eines Lösemittelgemischs aus Xylol, Methoxypropanol und Isobutanol, |
| 10,658 Gewichtsteile | Strontiumchromat, |
| 2,1 Gewichtsteile | einer Harzlösung aus 60 Gew.-% Laropal® K 80 (Ketonharz; Kondensationsprodukt aus Cyclohexanon), und 40 Gew.-% eines Lösemittelgemischs aus Xylol und Isobutanol, |
| 10 Gewichtsteile | einer Epoxidharzlösung (Parosin FE 42.4 von BASF Coatings AG), |
| 0,2 Gewichtsteile | eines handelsüblichen Netzmittels (SER-AD-FA 601), |
| 0,468 Gewichtsteile | Silcasil® S Neu (pyrogenes Siliziumdioxid), |
| 0,417 Gewichtsteile | Aerosil® 380 (pyrogenes Siliziumdioxid), |
| 0,1 Gewichtsteile | Flammruß 101, |
| 6,944 Gewichtsteile | Zinkphosphat ZP-BS-M, |
| 13,521 Gewichtsteile | Schwerspat EWO Normal, |
| 5,208 Gewichtsteile | Asbestine 10/0, |
| 9,028 Gewichtsteile | Talkum 10 MO Micro, |
| 10,938 Gewichtsteile | Titan Rutil TR 92 und |
| 9,6 Gewichtsteile | eines Lösemittelgemisch aus Xylol, Butanol und Methoxypropanol. |

Nach intensivem Dissolvern wurde das Vorprodukt auf einer Rührwerksmühle auf eine Mahlfeinheit nach Hegmann von 22 bis 26 µm vermahlen und anschließend mit 4,5 Gewichtsteilen Methoxypropanol und 0,5 Gewichtsteilen des bei dem Herstellbeispiel 1 beschriebenen Verlaufmittels komplettiert.

### Beispiel 1

### Die Herstellung einer neuen chromathaltigen Pigmentpaste

In einem Transportgefäß, das mit einem Dissolver ausgerüstet war, wurden 30 Gewichtsteile Synthalat® A 200 (Hydroxyl- und Epoxidgruppen enthaltendes (Meth)Acrylatcopolymerisat der Firma Synthopol Chemie; Hydroxylzahl: 200 mg KOH/g) vorgelegt und mit 2,5 Gewichtsteilen Aerosil® R 972 (handelsübliches Thixotropierungsmittel) versetzt und während 20 Minuten homogenisiert. Die resultierende Mischung wurde mit 17,5 Gewichtsteilen eines organischen Lösemittels (Butylacetat und Ethylethoxypropionat dem Verhältnis 1: 1) verdünnt. Danach wurden unter Beachtung der für die Handhabung von Chromaten vorgeschriebenen Sicherheüsvorschriften 50 Gewichtsteile Zinkchromat hinzugegeben. Nach intensivem Dissolvern wurde der Ansatz mittels einer Rührwerksmühle auf eine Mahlfeinheit nach Hegmann von 20 bis 22 µm gemahlen.

### Beispiel 2

### Die Herstellung eines neuen Mehrkomponentenfüllers auf Basis von isocyanatreaktiven Bindemitteln und Polyisocyanaten

Zur Herstellung des neuen Mehrkomponentenfüllers wurden 4 Volumenteile der Bindemittelkomponente (II) gemäß Herstellbeispiel 1 mit 1 Volumenteil der neuen chromathaltigen Pigmentpaste (I) des Beispiels 1 miteinander vermischt.

4 Volumenteile der resultierende Mischung (I/II), 1 Volumenteil der Verntzungsmittelkomponente (III) des Herstellbeispiels 2 und 1 Volumenteil des Einstellzusatzes (VI) des Herstellbeispiels 5 wurden vermischt, wodurch der neue Mehrkomponentenfüller resultierte.

### Beispiel 3

### Die Herstellung eines neuen Mehrkomponentenfüllers auf Basis von Epoxidharzen und Polyaminen

Für die Herstellung des neuen Mehrkomponentenfüllers auf Basis von Epoxidharzen und Polyaminen wurden 4 Volumenteile der Bindemittelkomponente (IV) des Herstellbeispiels 3 und 1 Volumenteil der neuen chromathaltigen Pigmentpaste (I) des Beispiels 1 miteinander vermischt.

2 Volumenteile der Mischung (I/IV) wurden mit 1 Volumenteil der Vernetzungsmittelkomponente (V) des Herstellbeispiels 4 vermischt und mit 30%, bezogen auf die Mischung (I/IV/V), des Einstellzusatzes (VI) des Herstellbeispiels 5 komplettiert.

### Vergleichsversuch 1

### Die Herstellung eines chromatenfreien Mehrkomponentenfüllers auf der Basis von isocyanatreaktiven Bindemitteln und Polyisocyanaten

Für die Herstellung des chromatfreien Mehrkomponentenfüllers auf der Basis von isocyanatreaktiven Bindemitteln und Polyisocyanaten wurden 4 Volumenteile der Bindemittelkomponente (II) des Herstellbeispiels 1, 1 Volumenteil der Vernetzungsmittelkomponente (II) des Herstellbeispiels 2 und 1 Volumenteil des Einstellzusatzes (VI) des Herstellbeispiels 5 miteinander vermischt.

### Vergleichsversuch 2

### Die Herstellung eines herkömmlichen chromathaltigen Mehrkomponentenfüllers auf der Basis von Epoxidharzen und Polyaminen

Für die Herstellung des herkömmlichen chromathaltigen Mehrkomponentenfüllers auf Basis von Epoxidharzen und Polyaminen wurden 2 Volumenteile der Bindemittelkomponente des Herstellbeispiels 6 und 1 Volumenteil der Vernetzungsmittelkomponente (V) des Herstellbeispiels 4 miteinander vermischt und mit 30%, bezogen auf die Mischung, des Einstellzusatzes (VI) des Herstellbeispiels 5 komplettiert.

### Beispiele 4 bis 6 und Vergleichsversuche 3 bis 5

### Die Herstellung von Beschichtungen auf metallischen Substraten und die anwendungstechnischen Eigenschaften der Beschichtungen

### Beispiel 4:

Bei Beispiel 4 wurde der neue chromathaltige Mehrkomponentenfüller des Beispiels 2 auf Prüftafeln aus Aluminium, Eisen und verzinktem Stahl appliziert, während einer Stunde abgelüftet und naß-in naß mit einem handelsüblichen Zweikomponentendecklack der Reihe 18 von BASF Coatings AG überschichtet, wonach die beiden Schichten an der Luft während 12 Stunden bei Raumtemperatur gemeinsam getrocknet wurden. Es resultierte eine Füllerlackierung der Schichtdicke 90 µm und eine Decklackierung der Schichtdicke 80 µm.

### Vergleichsversuch 3:

Beispiel 4 wurde wiederholt, nur daß anstelle des Mehrkomponentenfüllers des Beispiels 2 der herkömmliche chromatfreie Mehrkomponentenfüller des Vergleichsversuchs 1 verwendet wurde.

In der Tabelle 1 und 2 werden wichtige anwendungstechnische Eigenschaften der Beschichtungen des Beispiels 4 und des Vergleichsversuchs 3 miteinander verglichen.

Der Vergleich zeigt, daß die Beschichtungen des Beispiels 4 und des Vergleichsversuchs 3 im Decklackstand, in der Kratzfestigkeit und der Haftfestigkeit gleichwertig waren. Die Beschichtung des Beispiels 4 war jedoch der Beschichtung des Vergleichsversuchs 3 in der Korrosionsschutzwirkung überlegen.

**Tabelle 1:**

| **Anwendungstechnische Eigenschaften der Beschichtungen des Beispiels 4 und des Vergleichsversuchs 3** | | | | | | | | | |
|---|---|---|---|---|---|---|---|---|---|
| **Testmethode** | **Vergleichsversuch 3** | | | **Beispiel** | | | **4** | | |
| | **Vergleich Substrate:** | | | **Substrate:** | | | | | |
| | **Al** | **Fe** | **Zn** ^{**a)**} | **Al** | **Fe** | **Zn** ^{**a)**} | **Al** | **Fe** | **Zn** |
| Decklackstand | | | | | | | | | |
| (Note: 0 (schlecht) bis 10 (sehr gut): | 7 | 7 | 7 | 7 | 7 | 7 | 0 | 0 | 0 |
| Kratztest | | | | | | | | | |
| (Kabelmesser): | 10 | 10 | 10 | 10 | 10 | 10 | 0 | 0 | 0 |
| Gitterschnitttest | | | | | | | | | |
| (DIN ISO 2409: 1994-10): | 0/0 | 0/0 | 0/0 | 0/0 | 0/0 | 0/0 | 0 | 0 | 0 |
| Wassersprühtest (In Anlehnung an DIN 50907, Abs. 3.1): | | | | | | | | | |
| 1. Auswertung: | m0g0 | m0g0 | m0g0 | m0g0 | m0g0 | m0g0 | 0 | 0 | 0 |
| 4. Auswertung: H/V 1 h nach | m0g0 | m0g0 | m0g0 | m0g0 | m0g0 | m0g0 | 0 | 0 | 0 |
| Belastung: | 5/- | 1/4 | 1/3 | 1/1 | 1/1 | 1/2 | + | + | + |
| Schwitzwasser-Test (KK) (DIN50017KK): | | | | | | | | | |
| 1. Auswertung: | m0g0 | m0g0 | m0g0 | m0g0 | m0g0 | m0g0 | 0 | 0 | 0 |
| 3. Auswertung: | m5g3 | | | mlg2 | | m5g2 | + | 0 | - |
| H/V 1 h nach Belastung: | 5/- | 1/0 | 1/0 | 2*/4 | 1*/3 | 1/2 | + | - | - |
| H/V 24 h nach Belastung: | 5/- | 2/0 | 2/0 | 3*/0 | 2/0 | 3/0 | + | 0 | - |
| Salzsprühnebel-Test 1.000 h (DIN 50021SS) sichtbare Unterwanderung: | 5F ^{d)} | 0 | 2 | 0 | 0,5 | 0,5 | + | 0 | - |
| Kontaktkorrosion: | 15 ^{b)} | | 10 ^{c)} | | OK ^{b)} | 2 ^{c)} | + | | + |
| Sichtbare Unter- | | | | | | | | | |
| wanderung: | 7 | 4 | 5 | 0 | 4 | 0 | + | 0 | + |
| Kontaktkorrosion: | 30 ^{b)} | | 10 ^{c)} | 1 ^{b)} | | 10 ^{c)} | + | | 0 |
| Gekratzte Unter- | | | | | | | | | |
| wanderung: | 17 | 7 | 6 | 0 | 4 | 4 | + | + | + |
| Gekratzte Kontakt- | | | | | | | | | |
| Korrosion: | 53 ^{b)} | | 22 ^{c)} | 6 ^{b)} | | 18 ^{c)} | + | | + |
| H/V 1 h nach | | | | | | | | | |
| Belastung: | 5/- | 2/0 | 3/0 | 3/0 | 3/0 | 3/0 | + | + | 0 |
| H/V 24 h nach | | | | | | | | | |
| Belastung: | 5/- | 1/0 | 2/0 | 3/0 | 1/0 | 2/0 | + | 0 | 0 |
| + = Verbesserung; | | | | | | | | | |
| 0 = keine Veränderung; | | | | | | | | | |
| - = Verschlechterung; | | | | | | | | | |
| H/V = Haftung und Verbund; | | | | | | | | | |

| | | | | | | | | | |
|---|---|---|---|---|---|---|---|---|---|
| a) = verzinkter Stahl; | | | | | | | | | |
| b) = Kontaktkorrosion zwischen Aluminium und Eisen; | | | | | | | | | |
| c) = Kontaktkorrosion zwischen Eisen und Zink; | | | | | | | | | |
| d) = Filiformunterwanderung. | | | | | | | | | |

**Tabelle 2:**

| **Korrosionsschutzwirkung der Beschichtungen des Beispiels 4 und des Vergleichsversuchs 3 auf Aluminium** | | | |
|---|---|---|---|
| **Testmethode** | **Vergleichsversuch** | **Beispiel** | **4** |
| | **Vergleich** | | |
| | **Substrate: Al/Al** | **Substrate:** | **Al/Al** |
| | **Ritz/Niete** | **Ritz/Niete** | |
| | **Ritz/Niete** | | |
| Salzsprühnebel-Test ESS 1.000 h (DIN 50021-ESS) Unterwanderung | | | |
| Ritz/Nieten: | 25/15 | 0/OK | +/+ |
| Ritz/Nieten: Gekratzte Unter- | 60/Nieten | 0,5/Nieten | +/0 |
| Wanderung: H/V 1 h nach | alles | OK | + |
| Belastung H/V 24 h nach | 5/- | 4*/0 | + |
| Belastung | 2/0 | 3/0 | |
| + = Verbesserung; | | | |
| 0 = keine Veränderung; | | | |
| - = Verschlechterung; | | | |
| H/V = Haftung und Verbund; | | | |

### Beispiel 5:

Bei Beispiel 5 wurde der neue chromathaltige Mebrkomponentenfüller des Beispiels 2 auf Prüftafeln aus Aluminium, Eisen und verzinktem Stahl appliziert und während 60 Minuten bei Raumtemperatur abgelüftet. Anschließend wurde die Füllerlackierung mit dem chromatfreien Mehrkomponentenfüller des Vergleichsversuchs 1 überschichtet. Die resultierende Schicht wurde während 60 Minuten abgelüftet und dann mit einem handelsüblichen Zweikomponentendecklack der Reihe 18 von BASF Coatings AG überschichtet, wonach die drei Schichten an der Luft während 12 Stunden gemeinsam bei Raumtemperatur getrocknet wurden. Es resultierten eine chromathaltige erste Füllerlackierung der Schichtdicke von 35 µm, eine chromatfreie zweite Füllerlackierung der Schichtdicke 40 µm und eine Decklackierung der Schichtdicke 90 µm.

### Vergleichsversuch 4:

Bei Vergleichsversuch 4 wurde der herkömmliche chromathaltige Mehrkomponentenfüller des Vergleichsversuchs 1 auf mit einem chromathaltigen Wash-Primer vorbehandelte Prüftafeln aus Aluminium, Eisen und verzinktem Stahl appliziert, während 60 Minuten bei Raumtemperatur abgelüftet und naß-in-naß mit einem handelsüblichen Zweikomponentendecklack der Reihe 18 von BASF Coatings AG überschichtet, wonach die drei Schichten an der Luft während 12 Stunden gemeinsam bei Raumtemperatur getrocknet wurden. Es resultierte eine Wash-Primer-Schicht einer Schichtdicke von 9 µm eine Füllerlackierung einer Schichtdicke von 100 µm und eine Decklackierung einer Schichtdicke von 100 µm.

In den Tabelle 3 und 4 werden wichtige anwendungstechnische Eigenschaften der Beschichtungen des Beispiels 5 und des Vergleichsversuchs 4 miteinander verglichen.

Der Vergleich zeigt, daß die Beschichtung des Beispiels 5 und des Vergleichsversuchs 4 im Decklackstand, in der Kratzfestigkeit und der Haftfestigkeit gleichwertig waren. In der Korrosionsschutzwirkung war aber die Beschichtung des Beispiels 5 der Beschichtung des Vergleichsversuchs 4 überlegen. Dies zeigt desweiteren, daß der neue chromathaltige Mehrkomponentenfüller des Beispiels 2 in der Lage ist, eine Wash-Primer-Schicht zu ersetzen.

**Tabelle 3:**

| **Anwendungstechnische Eigenschaften der Beschichtungen des Beispiels 5 und des Vergleichsversuchs 4** | | | | | | | | | |
|---|---|---|---|---|---|---|---|---|---|
| **Testmethode** | **Vergleichsversuch 4** | | | **Beispiel** | | | **5** | | |
| | **Vergleich** | | | | | | | | |
| | **Substrate:** | | | **Substrate:** | | | | | |
| | **Al** | **Fe** | **Zn** ^{**a)**} | **Al** | **Fe** | **Zn** | **Al** | **Fe** | **Zn** |
| Decklackstand (Note: 0 (schlecht) bis 10 (sehr gut): | 7 | 7 | 7 | 7 | 7 | 7 | 0 | 0 | 0 |
| Kratztest (Kabelmesser): | 10 | 10 | 10 | 10 | 10 | 10 | 0 | 0 | 0 |
| Gitterschnitttest (DIN ISO 2409: 1994-10): | 0/0 | 0/0 | 0/0 | 0/0 | 0/0 | 0/0 | 0 | 0 | 0 |
| Wassersprühtest (In Anlehnung an DIN 50907, Abs. 3.1): | | | | | | | | | |
| 1. Auswertung: | m0g0 | m0g0 | m0g0 | m0g0 | m0g0 | m0g0 | 0 | 0 | 0 |
| 4. Auswertung: H/V 1 h nach | m0g0 | m0g0 | m0g0 | m0g0 | m0g0 | m0g0 | 0 | 0 | 0 |
| Belastung: | 0/0/3 | 0/0/2 | 1/0/4 | 1/0/3 | 1/0/3 | 1/0/1 | 0 | - | + |
| Schwitzwasser-Test (KK) (DIN50017KK): 1. Auswertung: | m0g0 | m0g0 | m0g0 | m0g0 | m0g0 | m0g0 | 0 | 0 | 0 |
| 3. Auswertung: | m0g0 | m0g0 | m0g0 | m1g2 | m0g0 | m5g2 | - | 0 | - |
| H/V 1 h nach Belastung: | 0/3/2 | 0/1/2 | 0/2/3 | 2/1/0 | 1/2/0 | 2/3/0 | + | 0 | 0 |
| H/V 24 h nach Belastung: | 0/3/0 | 0/2/0 | 0/3/0 | 3/0/0 | 2/0/0 | 2/0/0 | 0 | 0 | 0 |
| Salzsprühnebel-Test 1.000 h (DIN 50021SS) sichtbare Unterwanderung: | 0 | 1 | 1,5 | 0 | 2 | 2 | 0 - | | + |
| Kontaktkorrosion: Sichtbare Unter- | 2 ^{b)} | | 2 ^{c)} | 2 ^{b)} | | 5 ^{c)} | 0 | | - |
| wanderung: | 0 | 4 | alles | 0 | 3 | 7 | 0 | + | + |
| Kontaktkorrosion: | 3^{b)} | | 15^{c)} | 5^{b)} | | 12^{c)} | + | | + |
| Gekratzte Unter- | | | | | | | | | |
| wanderung: | 0 | 9 | 9 | 0 | 4 | 8 | 0 | + | + |
| Gekratzte Kontakt- | | | | | | | | | |
| Korrosion: | 15^{b)} | | 28 ^{c)} | 5 | | 12 ^{c)} | + | | + |
| H/V 1 h nach | | | | | | | | | |
| Belastung: | 0/4/0 | 0/3/0 | 5/-/- | 4/0/0 | 2/0/0 | 3/0/0 | 0 | + | + |
| H/V 24 h nach | | | | | | | | | |
| Belastung: | 0/3/0 | 0/2/0 | 5/-/- | 2/0/0 | 1/0/0 | 3/0/0 | + | + | + |
| + = Verbesserung; | | | | | | | | | |
| 0 = keine Veränderung; | | | | | | | | | |
| - = Verschlechterung; | | | | | | | | | |
| ng = nicht gemessen; | | | | | | | | | |
| H/V = Haftung und Verbund; | | | | | | | | | |

| | | | | | | | | | |
|---|---|---|---|---|---|---|---|---|---|
| a) = verzinkter Stahl; | | | | | | | | | |
| b) = Kontaktkorrosion zwischen Aluminium und Eisen; | | | | | | | | | |
| c) = Kontaktkorrosion zwischen Eisen und Zink. | | | | | | | | | |

**Tabelle 4:**

| Korrosionsschutzwirkung der Beschichtungen des Beispiels 5 und des Vergleichsversuchs 4 auf Aluminium | | | | |
|---|---|---|---|---|
| Testmethode | Vergleichsversuch 4 | Beispiel | | 5 |
| | Vergleich | | | |
| | Substrate: Al/Al | Substrate: Al/Al | | |
| | Ritz/Niete | Ritz(Niete | | |
| | Ritz/Niete | | | |

| | | | | |
|---|---|---|---|---|
| Salzsprühnebel-Test ESS 1.000 h (DIN 50021-ESS) Unterwanderung Ritz/Nieten: | 2*5/1N | | 0/OK | |
| | +/+ | | | |
| Ritz/Nieten: | 19/Nieten+20 | | 0,2/OK | |
| | +/0 | | | |
| Gekratzte Unter-Wanderung: | 19/20 | 1 | | + |
| H/V 1 h nach Belastung | 0/4/3 | 2/0/0 | | + |
| H/V 24 h nach Belastung | 0/4/0 | 4/0/0 | | 0 |
| + = Verbesserung; | | | | |
| 0 = keine Veränderung; | | | | |
| - = Verschlechterung; | | | | |
| H/V = Haftung und Verbund; | | | | |

### Beispiel 6:

Bei Beispiel 6 wurde der neue chromathaltige Mehrkomponentenfüller des Beispiels 3 auf Prüftafeln aus Aluminium, Eisen und verzinktem Stahl appliziert, abgelüftet und während 30 Minuten bei 60°C getrocknet. Anschließend wurde die Füllerlackierung mit einem handelsüblichen Zweikomponentendecklack der Reihe 18 von BASF Coatings AG überschichtet, wonach die beiden Schichten an der Luft während 12 Stunden gemeinsam bei Raumtemperatur fertig getrocknet wurden. Es resultierte eine chromathaltige Füllerlackierung der Schichtdicke von 90 µm und eine Decklackierung der Schichtdicke 90 µm.

### Vergleichsversuch 5:

Beispiel 6 wurde wiederholt, nur daß anstelle des Mehrkomponentenfüllers des Beispiels 3 der herkömmliche chromathaltige Mehrkomponentenfüller des Vergleichsversuchs 2 verwendet wurde.

In den Tabellen 5 und 6 werden wichtige anwendungstechnische Eigenschaften der Beschichtungen des Beispiels 6 und des Vergleichsversuchs 5 miteinander verglichen.

Der Vergleich zeigt, daß die Beschichtungen des Beispiels 6 und des Vergleichsversuchs 5 im Decklackstand, in der Kratzfestigkeit und der Haftfestigkeit gleichwertig waren. Die Beschichtung des Beispiels 6 war jedoch der Beschichtung des Vergleichsversuchs 5 in der Korrosionsschutzwirkung überlegen.

**Tabelle 5:**

| **Anwendungstechnische Eigenschaften der Beschichtungen des Beispiels 6 und des Vergleichsversuchs 5** | | | | | | | | | |
|---|---|---|---|---|---|---|---|---|---|
| **Testmethode** | **Vergleichsversuch 5 Beispiel** | | | | | | **6** | | |
| | **Vergleich Substrate:** | | | **Substrate:** | | | | | |
| | **Al** | **Fe** | **Zn**^{**a)**} | **Al** | **Fe** | **Zn** | **Al** | **Fe** | **Zn** |
| Decklackstand (Note: 0 (schlecht) bis 10 (sehr gut): 7 | | 7 | 7 | 7 | 7 | 7 | 0 | 0 | 0 |
| Kratztest (Kabelmesser): | 10 | 10 | 10 | 10 | 10 | 10 | 0 | 0 | 0 |
| Gitterschnitttest (DIN ISO 2409: 1994-10): | 0/0 | 0/0 | 0/0 | 0/0 | 0/0 | 0/0 | 0 | 0 | 0 |
| Wassersprühtest (In Anlehnung an DIN 50907, Abs. 3.1): 1. Auswertung: | m2g1 | m0g0 | m5g1 | m0g0 | m0g0 | m0g0 | + | 0 | + |
| 4. Auswertung: | m2g1 | m0g0 | m0g0 | m5g1 | m0g0 | m0g0 | + | 0 | + |
| H/V 1h nach Belastung: | 0/0 | 0/0 | 0/0 | 0/0 | 0/0 | 0/0 | 0 | 0 | 0 |
| Schwitzwasser-Test (KK) (DIN50017KK): 1. Auswertung: | m0g0 | m0g0 | m0g0 | m0g0 | m0g0 | m0g0 | 0 | 0 | 0 |
| 3. Auswertung: | m0g0 | m0g0 | m5g2 | m0g0 | m0g0 | m0g0 | 0 | 0 | + |
| H/V 1 h nach Belastung: | 0/0 | 0/0 | 1/0 | 0/0 | 0/0 | 0/0 | 0 | 0 | + |
| H/V 24 h nach Belastung: | 0/0 | 0/0 | 1/0 | 1/0 | 1/0 | 1/0 | - | - | 0 |
| Salzsprühnebel-Test 1.000 h (DIN 50021 SS) sichtbare Unterwanderung: | 0 | 4 | 0 | 0 | 0,5 | 0,5 | 0 | + | 0 |
| Kontaktkorrosion: | 0^{b)} | | 0^{c)} | 0^{b)} | | 4^{c)} | + | | - |
| Sichtbare Unterwanderung: | 0 | 7 | 7 | 0 | 2 | 0,2 | 0 | + | + |
| Kontaktkorrosion: | 4^{b)} | | 6 | 0^{b)} | | 15 | + | | - |
| Gekratzte Unterwanderung: | 0 | 8 | 9 | 0 | 4 | 3 | 0 | + | + |
| Gekratzte Kontakt-Korrosion: | 11^{b)} | | 15^{c)} | 6^{b)} | | 33^{c)} | + | | - |
| H/V 1 h nach Belastung: | 1/0 | 1/0 | 3/0 | 3/0 | 1/0 | 1/0 | 0 | 0 | + |
| H/V 24 h nach Belastung: | 1/0 | 0/0 | 5/0 | 1/0 | 1/0 | 1/0 | 0 | 0 | + |
| + = Verbesserung; | | | | | | | | | |
| 0 = keine Veränderung; | | | | | | | | | |
| - = Verschlechterung; | | | | | | | | | |
| ng = nicht gemessen; | | | | | | | | | |
| H/V = Haftung und Verbund; | | | | | | | | | |
| a) = verzinkter Stahl; | | | | | | | | | |
| b) = Kontaktkorrosion zwischen Aluminium und Eisen; | | | | | | | | | |
| c) = Kontaktkorrosion zwischen Eisen und Zink. | | | | | | | | | |

**Tabelle 6:**

| **Korrosionsschutzwirkung der Beschichtungen des Beispiels 6 und des Vergleichsversuchs 5 auf Aluminium** | | | |
|---|---|---|---|
| **Testmethode** | **Vergleichsversuch 5** | **Beispiel** | 6 |
| | **Vergleich Substrate: Al/Al** | **Substrate: Al/Al** | |
| | **Ritz/Niete Ritz/Niete** | **Ritz/Niete** | |
| Salzsprühnebel-Test ESS 1.000 h (DIN 50021-ESS) Unterwanderung Ritz/Nieten: | 0/OK | 0/OK | 0/0 |
| Ritz/Nieten: | 0,5/2klBL | 0,2 | 0/0 |
| Gekratzte Unter-Wanderung: | OK | OK | 0/0 |
| H/V 1 h nach Belastung | 0/0 | 1/0 | - |
| H/V 24 h nach Belastung | 0/0 | 3/0 | - |
| + = Verbesserung; | | | |
| 0 = keine Veränderung; | | | |
| - = Verschlechterung; | | | |
| H/V = Haftung und Verbund; | | | |

## Patentansprüche

1. Verwendung einer chromathaltigen Pigmentpaste enthaltend, bezogen auf ihre Gesamtmenge,
(A) 10 bis 70 Gew.% mindestens eines Bindemittels mit isocyanatreaktiven funktionellen Gruppen und Epoxidgruppen und
(B) 30 bis 90 Gew.% mindestens eines Chromatpigments zur Einstellung des anwendungstechnischen Eigenschaftsprofils von Mehrkomponentenfüllern auf der Basis von Bindemittel mit isocyanatreaktiven funktionellen Gruppen und Polyisocyanaten oder von Epoxidharzen und Polyaminen.

2. Verwendung nach Anspruch 1, **dadurch gekennzeichnet, daß** die Haftung und die Korrosionsschutzwirkung der Mehrkomponentenfüller auf Metalloberflächen erhöht wird.

3. Verwendung nach Anspruch 2, **dadurch gekennzeichnet, daß** es sich bei den Metalloberflächen um die Oberflächen von Aluminium, Eisen oder verzinktem Stahl handelt.

4. Verwendung nach einem der Ansprüche 1 bis 3, **dadurch gekennzeichnet, daß** sie, bezogen auf ihre Gesamtmenge,
(C) 0,1 bis 5 Gew.% mindestens eines Thixotropierungsmittels enthält.

5. Verwendung nach einem der Ansprüche 1 bis 4, **dadurch gekennzeichnet, daß** sie, bezogen auf ihre Gesamtmenge,
(D) 5 bis 30 Gew.% mindestens eines organischen Lösemittels enthält.

6. Verwendung nach einem der Ansprüche 1 bis 5, **dadurch gekennzeichnet, daß** sie bezogen auf ihre Gesamtmenge
- 20 bis 40 Gew.% mindestens eines Bindemittels (A),
- 40 bis 60 Gew.% mindestens eines Chromatpigments (B),
- 1,5 bis 4 Gew.-% mindestens eines Thixotropierungsmittels (C) und
- 5 bis 30 Gew.% mindestens eines organischen Lösemittels (D) enthält.

7. Verwendung nach einem der Ansprüche 1 bis 6, **dadurch gekennzeichnet, daß** sie eine Mahlfeinheit nach Hegmann von 10 bis 30 µm hat.

8. Verwendung nach einem der Ansprüche 1 bis 7, **dadurch gekennzeichnet, daß** es sich bei den isocyanatreaktiven funktionellen Gruppen um Hydroxylgruppen handelt.

9. Verwendung nach einem der Ansprüche 1 bis 8, **dadurch gekennzeichnet, daß** es sich bei den Bindemitteln um (Meth)Acrylatcopolymerisate handelt.

10. Verwendung nach einem der Ansprüche 1 bis 9, **dadurch gekennzeichnet, daß** es sich bei den Chromatpigmenten um Blei-, Zink-, Strontium-und/oder Bariumchromat handelt.

11. Mischsystem zur bedarfsgerechten Herstellung chromathaltiger Mehrkomponentenfüller, umfassend die folgenden getrennt voneinander herzustellenden, zu lagernden und zu transportierenden Komponenten:
(I) Mindestens eine chromathaltigen Pigmentpaste enthaltend, bezogen auf ihre Gesamtmenge,
(A) 10 bis 70 Gew.% mindestens eines Bindemittels mit isocyanatreaktiven funktionellen Gruppen und Epoxidgruppen und
(B) 30 bis 90 Gew.% mindestens eines Chromatpigments sowie
(II) mindestens eine Bindemittelkomponente, enthaltend mindestens Bindemittel mit isocyanatreaktiven funktionellen Gruppen und
(III) mindestens eine Vernetzungsmittelkomponente, enthaltend mindestens ein Polyisocyanat
oder alternativ
(IV) mindestens eine Bindemittelkomponente, enthaltend mindestens ein Epoxidharz und
(V) mindestens eine Vernetzungsmittelkomponente, enthaltend mindestens ein Polyamin.

12. Mischsystem nach Anspruch 11, **dadurch gekennzeichnet, daß** die chromathaltige Pigmentpaste, bezogen auf ihre Gesamtmenge, (C) 0,1 bis 5 Gew.% mindestens eines Thixotropierungsmittels enthält.

13. Mischsystem nach einem der Ansprüche 11 oder 12, **dadurch gekennzeichnet, daß** die chromathaltige Pigmentpaste, bezogen auf ihre Gesamtmenge, (D) 5 bis 30 Gew.% mindestens eines organischen Lösemittels enthält.

14. Mischsystem nach einem der Ansprüche 11 bis 13, **dadurch gekennzeichnet, daß** die chromathaltige Pigmentpaste bezogen auf ihre Gesamtmenge
- 20 bis 40 Gew.% mindestens eines Bindemittels (A),
- 40 bis 60 Gew.% mindestens eines Chromatpigments (B),
- 1,5 bis 4 Gew.% mindestens eines Thixotropierungsmittels (C) und
- 5 bis 30 Gew.% mindestens eines organischen Lösemittels (D) enthält.

15. Mischsystem nach einem der Ansprüche 11 bis 14, **dadurch gekennzeichnet, daß** die chromathaltige Pigmentpaste eine Mahlfeinheit nach Hegmann von 10 bis 30 µm hat.

16. Mischsystem nach einem der Ansprüche 11 bis 15, **dadurch gekennzeichnet, daß** es sich bei den isocyanatreaktiven funktionellen Gruppen der chromathaltigen Pigmentpaste um Hydroxylgruppen handelt.

17. Mischsystem nach einem der Ansprüche 11 bis 16, **dadurch gekennzeichnet, daß** es sich bei den Bindemitteln der chromathaltigen Pigmentpaste um (Meth) Acrylatcopolymerisate handelt.

18. Mischsystem nach einem der Ansprüche 11 bis 17, **dadurch gekennzeichnet, daß** es sich bei den Chromatpigmenten um Blei-, Zink-, Strontium-und/oder Bariumchromat handelt.

## Claims

1. Use of a chromate pigment paste comprising, based on its overall amount,
(A) from 10 to 70% by weight of at least one binder containing isocyanate-reactive functional groups and epoxide groups, and
(B) from 30 to 90% by weight of at least one chromate pigment,
for adjusting the profile of performance properties of multicomponent surfacers based on binders containing isocyanate-reactive functional groups and polyisocyanates or on epoxy resins and polyamines.

2. Use according to Claim 1, **characterized in that** the adhesion and the anticorrosion effect of the multicomponent surfacers on metal surfaces are increased.

3. Use according to Claim 2, **characterized in that** the metal surfaces comprise the surfaces of aluminium, iron or galvanized steel.

4. Use according to any of Claims 1 to 3, **characterized in that**, based on its overall amount, it comprises
(C) from 0.1 to 5% by weight of at least one thixotropic agent.

5. Use according to any of Claims 1 to 4, **characterized in that**, based on its overall amount, it comprises
(D) from 5 to 30% by weight of at least one organic solvent.

6. Use according to any of Claims 1 to 5, **characterized in that**, based on its overall amount, it comprises
- from 20 to 40% by weight of at least one binder (A),
- from 40 to 60% by weight of at least one chromate pigment (B),
- from 1.5 to 4% by weight of at least one thixotropic agent (C), and
- from 5 to 30% by weight of at least one organic solvent (D).

7. Use according to any of Claims 1 to 6, **characterized in that** it has a Hegmann fineness-of-grind of from 10 to 30 µm.

8. Use according to any of Claims 1 to 7, **characterized in that** the isocyanate-reactive functional groups are hydroxyl groups.

9. Use according to any of Claims 1 to 8, **characterized in that** the binders are (meth)acrylate copolymers.

10. Use according to any of Claims 1 to 9, **characterized in that** the chromate pigments are lead, zinc, strontium and/or barium chromate.

11. Mixer system for preparing chromate-containing multicomponent surfacers, comprising the following components for preparation, storage and transportation separately from one another, as and when required:
(I) at least one chromate pigment paste comprising, based on its overall amount,
(A) from 10 to 70% by weight of at least one binder containing isocyanate-reactive functional groups and epoxide groups, and
(B) frcm 30 to 90% by weight of at least one chromate pigment, and also
(II) at least one binder component comprising at least binders containing isocyanate-reactive functional groups, and
(III) at least one crosslinking component comprising at least one polyisocyanate
or alternatively
(IV) at least one binder component comprising at least one epoxy resin, and
(V) at least one crosslinking component comprising at least one polyamine.

12. Mixer system according to Claim 11, **characterized in that**, based on its overall amount, the chromate pigment paste comprises
(C) from 0.1 to 5% by weight of at least one thixotropic agent.

13. Mixer system according to either of Claims 11 and 12, **characterized in that**, based on its overall amount, the chromate pigment paste comprises
(D) from 5 to 30% by weight of at least one organic solvent.

14. Mixer system according to any of Claims 11 to 13, **characterized in that**, based on its overall amount, the chromate pigment paste comprises
- from 20 to 40% by weight of at least one binder (A),
- from 40 to 60% by weight of at least one chromate pigment (B),
- from 1.5 to 4% by weight of at least one thixotropic agent (C), and
- from 5 to 30% by weight of at least one organic solvent (D).

15. Mixer system according to any of Claims 11 to 14, **characterized in that** the chromate pigment paste has a Hegmann fineness-of-grind of from 10 to 30µm.

16. Mixer system according to any of Claims 11 to 15, **characterized in that** the isocyanate-reactive functional groups of the chromate pigment paste are hydroxyl groups.

17. Mixer system according to any of Claims 11 to 16, **characterized in that** the binders of the chromate pigment paste are (meth)acrylate copolymers.

18. Mixer system according to any of Claims 11 to 17, **characterized in that** the chromate pigments are lead, zinc, strontium and/or barium chromate.

## Revendications

1. Utilisation d'une pâte de pigment qui contient du chromate et qui contient, par rapport à sa quantité totale :
(A) entre 10 et 70 % en poids d'au moins un liant qui présente des groupes fonctionnels qui réagissent avec les isocyanates, ainsi que des groupes époxy et
(B) entre 30 et 90 % en poids d'au moins un pigment au chromate
pour régler le profil de propriétés techniques d'utilisation de charges à plusieurs composants, à base de liants qui présentent des groupes fonctionnels qui réagissent avec les isocyanates et des polyisocyanates ou à base de résines époxy et de polyamines.

2. Utilisation selon la revendication 1, **caractérisée en ce que** les charges à plusieurs composants adhèrent mieux aux surfaces métalliques et les protègent mieux contre la corrosion.

3. Utilisation selon la revendication 2, **caractérisée en ce que** les surfaces métalliques sont les surfaces d'aluminium, de fer ou d'acier galvanisé.

4. Utilisation selon l'une des revendications 1 à 3, **caractérisée en ce que**, par rapport à sa quantité totale, la pâte de pigment contient :
(C) entre 0,1 et 5 % en poids d'au moins un agent de thixotropie.

5. Utilisation selon l'une des revendications 1 à 4, **caractérisée en ce que**, par rapport à sa quantité totale, la pâte de pigment contient :
(D) entre 5 et 30 % en poids d'au moins un solvant organique.

6. Utilisation selon l'une des revendications 1 à 5, **caractérisée en ce que**, par rapport à sa quantité totale, la pâte de pigment contient :
- entre 20 et 40 % en poids d'au moins un liant (A),
- entre 40 et 60 % en poids d'au moins un pigment au chromate (B),
- entre 1,5 et 4 % en poids d'au moins un agent de thixotropie (C) et
- entre 5 et 30 % en poids d'au moins un solvant organique (D).

7. Utilisation selon l'une des revendications 1 à 6, **caractérisée en ce que** la pâte de pigment présente une finesse de mouture selon Hegmann comprise entre 10 et 30 µm.

8. Utilisation selon l'une des revendications 1 à 7, **caractérisée en ce que** les groupes fonctionnels qui réagissent avec les isocyanates sont des groupes hydroxyle.

9. Utilisation selon l'une des revendications 1 à 8, **caractérisée en ce que** les liants sont des copolymères de (méth)acrylate.

10. Utilisation selon l'une des revendications 1 à 9, **caractérisée en ce que** les pigments au chromate sont le chromate de plomb, le chromate de zinc, le chromate de strontium et/ou le chromate de baryum.

11. Système de mélange pour préparer, en fonction des besoins, des charges à plusieurs composants qui contiennent du chromate et qui comprennent les composants suivants qui doivent être préparés, conservés et transportés séparément les uns des autres :
(I) au moins une pâte de pigment qui contient du chromate et qui contient par rapport à sa quantité totale :
(A) entre 10 et 70 % en poids d'au moins un liant qui présente des groupes fonctionnels qui réagissent avec les isocyanates et qui présente des groupes époxy et
(B) entre 30 et 90 % en poids d'au moins un pigment au chromate,
(II) au moins un composant liant qui contient au moins un liant qui présente des groupes fonctionnels qui réagissent avec les isocyanates et
(III) au moins un composant de réticulation qui contient au moins un polyisocyanate
ou, en variante,
(IV) au moins un composant liant qui contient au moins une résine époxy et
(V) au moins un composant de réticulation qui contient au moins une polyamine.

12. Système de mélange selon la revendication 11, **caractérisé en ce que** par rapport à sa quantité totale, la pâte de pigment qui contient du chromate contient :
(C) entre 0,1 et 5 % en poids d'au moins un agent de thixotropie.

13. Système de mélange selon l'une des revendications 11 ou 12, **caractérisé en ce que** par rapport à sa quantité totale, la pâte de pigment qui contient du chromate contient :
(D) entre 5 et 30 % en poids d'au moins un solvant organique.

14. Système de mélange selon l'une des revendications 11 à 13, **caractérisé en ce que** par rapport à sa quantité totale, la pâte de pigment qui contient du chromate contient :
- entre 20 et 40 % en poids d'au moins un liant (A),
- entre 40 et 60 % en poids d'au moins un pigment au chromate (B),
- entre 1,5 et 4 % en poids d'au moins un agent de thixotropie (C) et
- entre 5 et 30 % en poids d'au moins un solvant organique (D).

15. Système de mélange selon l'une des revendications 11 à 14, **caractérisé en ce que** la pâte de pigment présente une finesse de mouture selon Hegmann comprise entre 10 et 30 µm.

16. Système de mélange selon l'une des revendications 11 à 15, **caractérisé en ce que** les groupes fonctionnels de la pâte de pigment qui contient du chromate qui réagissent avec les isocyanates sont des groupes hydroxyle.

17. Système de mélange selon l'une des revendications 11 à 16, **caractérisé en ce que** les liants de la pâte de pigment qui contient du chromate sont des copolymères de (méth)acrylate.

18. Système de mélange selon l'une des revendications 11 à 17, **caractérisé en ce que** les pigments au chromate sont le chromate de plomb, le chromate de zinc, le chromate de strontium et/ou le chromate de baryum.
